# EUROPÄISCHE PATENTSCHRIFT

(11) **EP 0 732 529 B1**
(45) Veröffentlichungstag und Bekanntmachung des Hinweises auf die Patenterteilung: **29.12.1999**
(21) Anmeldenummer: 95116631.3
(22) Anmeldetag: 21.10.1995
(51) Int. Cl.: F16J 15/32

(54) **Dichtring**
Sealing ring
Anneau d'étanchéité

(30) Priorität: 17.03.1995 DE 19509771
(43) Veröffentlichungstag der Anmeldung: 18.09.1996
(73) Patentinhaber: Firma Carl Freudenberg, 69469 Weinheim (DE)
(72) Erfinder: Pauler, Franz, D-69514 Laudenbach (DE); Vogt, Rolf, D-68723 Oftersheim (DE); Dahlhaus, Ulrich, D-68535 Edingen (DE)

(56) Entgegenhaltungen:
- EP-A- 0 104 504
- EP-A- 0 317 903
- DE-A- 3 244 209
- US-A- 4 421 326

## Beschreibung

Die Erfindung betrifft einen Dichtring zum Einfügen in den radialen Zwischenraum zwischen zwei einander koaxial umschließende, relativ bewegliche Zylinderflächen eines ersten und eines zweiten Maschinenteils, umfassend erste Mittel zur statisch ruhenden Festlegung und Abdichtung des ersten Maschinenteils sowie zweite Mittel zur beweglichen Abdichtung des zweiten Maschinenteils, wobei die ersten Mittel durch einen mit dem ersten Maschinenteil in Eingriff stehenden, von einer Entlastungsnut durchbrochenen Haltering aus polymerem Werkstoff gebildet sind sowie durch eine der Entlastungsnut vorgelagerte, ringförmig gestaltete Lippendichtung, die durch den Druck des abzudichtenden Mediums beaufschlagt ist und sich oberhalb eines vorgegebenen Mindestdruckes elastisch verformt und in bezug auf das erste Maschinenteil außer Eingriff gelangt, wobei die Lippendichtung die erste Zylinderfläche während der bestimmungsgemäßen Verwendung des Dichtrings unter einer radialen Vorspannung anliegend berührt und sich nur bei Überschreitung des Mindestdrucks in radialer Richtung elastisch verformt. Generell besteht die Möglichkeit den durch den Dichtring abzudichtenden Raum zu belüften oder zu entlüften. Beim Zusammenbau von Getriebe und Achsen kommt es wegen nicht entlüfteter Aggregate häufig zu einem Druckaufbau innerhalb des abzudichtenden Raums, wobei die Druckdifferenz bei Überschreitung eines Grenzwerts durch ein selbsttätiges Abheben der Lippendichtung von der ersten Zylinderfläche ausgeglichen wird. Das Schmiermittel im abzudichtenden Raum ist dadurch nicht differenzdruckbeaufschlagt. Ein Ausölen des Fettes oder Leckagen sind dadurch auch während längerer Lagerzeiten sicher ausgeschlossen.

Ein erster Dichtring ist aus der DE 32 44 209 C2 bekannt. Der vorbekannte Dichtring ist als Dichtabstreifelement ausgebildet und weist einen Dichtkörper mit zwei axial mit Abstand hintereinander liegenden Abstreiflippen auf, wobei der Dichtring wenigstens einen quer zu seiner Achse vom Dichtkörper nach außen abstehenden Dichtteil aufweist, der unter Vorspannung dichtend an einer axial angrenzenden Gegendichtfläche anliegt. Der vorbekannte Dichtring ist als Sekundärdichtung ausgebildet und auf der dem abzudichtenden Medium abgewandten Seite einer Primärdichtung angeordnet. Der Ringraum, der sich zwischen der Primär- und der Sekundärdichtung befindet, kann sich während der bestimmungsgemäßen Verwendung allmählich mit dem abzudichtenden Medium, beispielsweise Öl, füllen, was zu einem Druckaufbau in diesem Raum führt. Die Aufgabe, die dem vorbekannten Dichtring zugrunde liegt, wird darin gesehen, den Dichtring so auszubilden, daß unter Verzicht auf Entlastungsbohrungen im Hydraulikzylinder ein überdruckbedingtes Herausdrücken der Dichtung verhindert wird. Durch die Entlastungsnut wird das im Ringraum zwischen der Primärdichtung und dem Dichtring vorhandene Öl bei ansteigendem Öldruck an der Lippendichtung vorbei an die Umgebung abgegeben, um anzuzeigen, daß die Primärdichtung defekt ist und daher ausgewechselt werden sollte. Dadurch, daß das Öl überdruckbedingt durch die Entlastungsnut in Richtung der Umgebung abströmt, soll verhindert werden, daß Verunreinigungen in den abzudichtenden Raum eindringen.

Aus der US-A-4 421 326 ist ein Dichtring bekannt, der eine Welle gegenüber einem Gehäuse abdichtet. Die Abdichtung gegenüber der Welle als dem bewegten Bauteil erfolgt durch eine doppelte Lippendichtung, die ein gewisses Sppiel ausgleichen kann. Der Dichtring ist unter Verwendung eines Stützkäfigs oder eines Halterings aus elastomerem Material in dem Gehäuse festgelegt und mittels einer weiteren Dichtlippe abgedichtet. Diese Dichtlippe wird dabei über einen Entlüftungskanal mit dem in dem abzudichtenden Raum herrschenden Druck beaufschlagt und gibt bei Überschreitung eines Grenzdrucks nach. Dadurch kann die Luft aus dem abzudichtenden Raum austreten. Die Dichtlippe kann dabei einen geringfügig größeren Durchmesser als der Durchmesser des Stützkäfigs aufweisen.

Der Erfindung liegt die Aufgabe zugrunde, ein Dichtring der eingangs genannten Art derart weiter zu entwickeln, daß er zum Einbau in nicht entlüfteten Aggregaten, wie beispielsweise Achsen und Getrieben vorgesehen werden kann und daß auch bei längerer Lagerung nicht entlüfteter Aggregate ein Ausölen des Fettes und/oder eine Leckage zuverlässig vermieden wird.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es gemäß des kennzeichnenden Teils des Hauptanspruchs vorgesehen, daß die Entlastungsnuten einen im wesentlichen wannenförmigen Querschnitt aufweisen und eine radiale Tiefe, die 0,02 bis 1,0 mm beträgt, wobei das Verhältnis aus axialer Länge jeder Entlastungsnuten und ihrer radialen Tiefe 50 bis 500 beträgt. Hierbei ist von Vorteil, daß die Entlastungsnuten nur eine vergleichsweise geringe radiale Tiefe aufweisen und dadurch beispielsweise Schwebepartikel im abzudichtenden Medium zuverlässig aus der Entlastungsnut ferngehalten werden. Eine Beschädigung der Lippendichtung sowie Störungen der Gebrauchseigenschaften durch Ablagerungen im Bereich der Lippendichtung sind daher ausgeschlossen. Die Gebrauchseigenschaften werden während einer langen Gebrauchsdauer erhalten.

Der erfindungsgemäße Dichtring wird bevorzugt zur Be- oder Entlüftung eines abzudichtenden Raums verwendet.

Der Dichtring bildet einen Bestandteil einer Dichtungsanordnung, wobei der Dichtring eine abzudichtende Welle unter radialer Vorspannung dichtend umschließt und von einem Gehäuse unter radialer Vorspannung dichtend umschlossen ist. Der Dichtring weist einen im wesentlichen L-förmigen Versteifungsring aus zähhartem Werkstoff auf, mit einem Axialvorsprung und einem Radialvorsprung, wobei der Axialvorsprung vom elastomeren Werkstoff der statisch dichtenden ersten Dichtung im wesentlichen vollständig umschlossen ist und wobei der Radialvorsprung mit einer dynamisch dichtenden, als Lippendichtung ausgebildeten zweiten Dichtung aus elastomerem Werkstoff verbunden ist. Die erste Dichtung weist auf der der zweiten Dichtung radial abgewandten Seite zumindest einen nutförmigen Kanal auf, der sich im wesentlichen entlang der gesamten axialen Ausdehnung des Radialwellendichtrings erstreckt und die gegeneinander abzudichtenden Räume bedarfsweise strömungsleitend verbindet und wobei der Kanal zur Entlüftung des abzudichtenden Raums auf der dem abzudichtenden Raum abgewandten Seite oder zur Belüftung des abzudichtenden Raums auf der dem abzudichtenden Raum zugewandten Seite mit einer durch Differenzdruck betätigbaren Ventillippe selbsttätig verschließbar ist. Die Ventillippe ist statisch dichtend mit dem in radialer Richtung angrenzenden Maschinenteil in Eingriff bringbar.

Zur Erzielung einer einfachen und kostengünstigen Herstellung kann es vorgesehen sein, daß die Lippendichtung einstückig ineinander übergehend mit dem Haltering ausgebildet ist.

Eine weitere Vereinfachung kann dadurch bewirkt werden, daß das erste, das zweite Mittel und die Lippendichtung materialeinheitlich und einstückig ineinander übergehend ausgebildet sind.

Der Haltering weist bevorzugt radial außenseitig eine sich in axialer Richtung erstreckende, wellenförmige Oberflächenprofilierung auf. Hierbei ist von Vorteil, daß herstellungsbedingte Toleranzen des ersten und/oder des zweiten Maschinenteils und daraus resultierend maßliche Abweichungen des Zwischenraums ausgeglichen werden können. Durch die einfach auszugleichenden Toleranzen ist die gesamte Dichtungsanordnung kostengünstig herstellbar. Nach einer anderen Ausgestaltung besteht auch die Möglichkeit, daß der Haltering radial außenseitig in axialer Richtung eben ausgebildet ist.

Bevorzugt gelangen drei gleichmäßig in Umfangsrichtung verteilte, kanalförmige Entlastungsnuten zur Anwendung. Hierbei ist von Vorteil, daß eine elastische Verformung der Lippendichtung in radialer Richtung zu einer relativ gleichmäßigen Biegebelastung der Lippendichtung führt und daher unerwünschte patielle Relaxationserscheinungen der Lippendichtung sowie Verkantungen vermieden werden.

Im Hinblick auf ein möglichst konstantes Bewegungsverhalten der Lippendichtung während einer langen Gebrauchsdauer kann es vorgesehen sein, daß die Lippendichtung eine Armierung aufweist, die vom polymeren Werkstoff vollständig umschlossen ist. Das zähharte Material der Armierung kann beispielsweise durch einen polymeren Werkstoff gebildet sind, bevorzugt allerdings aus einem metallischen Werkstoff.

Anhand der Fig. 1 bis 4 wird der erfindungsgemäße Dichtring nachfolgend näher erläutert.

Es zeigen:

Fig. 1 ein erstes Ausführungsbeispiel des erfindungsgemäßen Dichtrings, der zur Entlüftung eines abzudichtenden Raums vorgesehen ist.

Fig. 2 ein zweites Ausführungsbeispiel zur Entlüftung des abzudichtenden Raums.

Fig. 3 ein drittes Ausführungsbeispiel, bei dem die Entstehung eines Vakuums durch eine Belüftung eines abzudichtenden Raums verhindert wird.

Fig. 4 ein viertes Ausführungsbeispiel, das im wesentlichen dem Ausführungsbeispiel aus Fig. 1 entspricht, wobei die Lippendichtung und die Stirnseite des Dichtrings in einer Radialebene angeordnet sind.

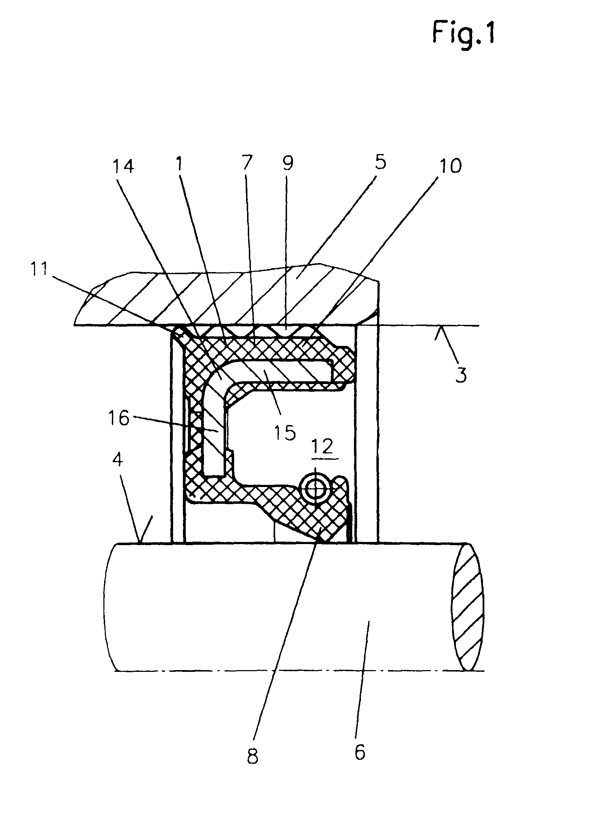

In den Fig. 1 bis 4 ist jeweils eine Dichtungsanordnung gezeigt, umfassend einen Dichtring 1, der ein erstes Maschinenteil 5 unter radialer Vorspannung dichtend umschließt und von einem zweiten Maschinenteil 6 unter radialer Vorspannung dichtend umschlossen ist. Jeder der Dichtringe 1 weist einen im wesentlichen L-förmigen Versteifungsring 14 aus einem zähharten Werkstoff auf, in diesen Ausführungsbeispielen aus Metall. Der Versteifungsring 14 weist einen Axialvorsprung 15 und einen Radialvorsprung 16 auf, wobei der Axialvorsprung 15 von elastomerem Werkstoff der statisch dichtenden ersten Dichtung 7 im wesentlichen vollständig umschlossen ist. Der Radialvorsprung 16 ist mit einer dynamisch dichtenden, als Lippendichtung 11 ausgebildeten zweiten Dichtung 8 aus elastomerem Werkstoff verbunden. Die erste Dichtung 7 weist auf der der zweiten Dichtung 8 abgewandten Seite in diesen Ausführungsbeispielen drei gleichmäßig in Umfangsrichtung verteilte, nutförmige Kanäle auf, die als Entlastungsnuten 9 bezeichnet sind. Die Entlastungskanäle erstrecken sich im wesentlichen entlang der gesamten axialen Ausdehnung des Dichtrings 1 und verbinden die gegeneinander abzudichtenden Räume 12 und die Atmosphäre. Die Entlastungsnuten 9 sind in axialer Richtung einerseits jeweils durch die Lippendichtung 11 verschlossen. Die Entlastungsnut 9 ist zur Entlüftung des abzudichtenden Raums 12 auf der dem abzudichtenden Raum 12 zugewandten Seite oder zur Belüftung des abzudichtenden Raums 12 auf der dem abzudichtenden Raum 12 zugewandten Seite mit der durch Differenzdruck betätigbaren Lippendichtung 11 versehen, die selbsttätig verschließbar ist. Die Lippendichtung 11 ist statisch dichtend ausgeführt und mit dem in radialer Richtung angrenzenden Maschinenteil 5, 6 in Eingriff bringbar.

In Fig. 1 kann der abzudichtende Raum 12 bedarfsweise entlüftet werden. Im hier dargestellten Beispiel sind die beiden Maschinenteile 5, 6 relativ zueinander abgedichtet. Baut sich innerhalb des abzudichtenden Raums 12 ein Überdruck auf, der einen der Auslegung des Dichtrings 1 zugrunde gelegten Schwellwert überschreitet, verformt sich die Lippendichtung 11 in radialer Richtung und hebt von der ersten Zylinderfläche 3 des als erstes Maschinenteil 5 ausgebildeten Gehäuses ab. Ist der Druckausgleich erfolgt und der Druck innerhalb des abzudichtenden Raums 12 befindet sich unterhalb des Schwellwerts, legt sich die Lippendichtung 11 wieder selbsttätig an die erste Zylinderfläche des ersten Maschinenteils an.

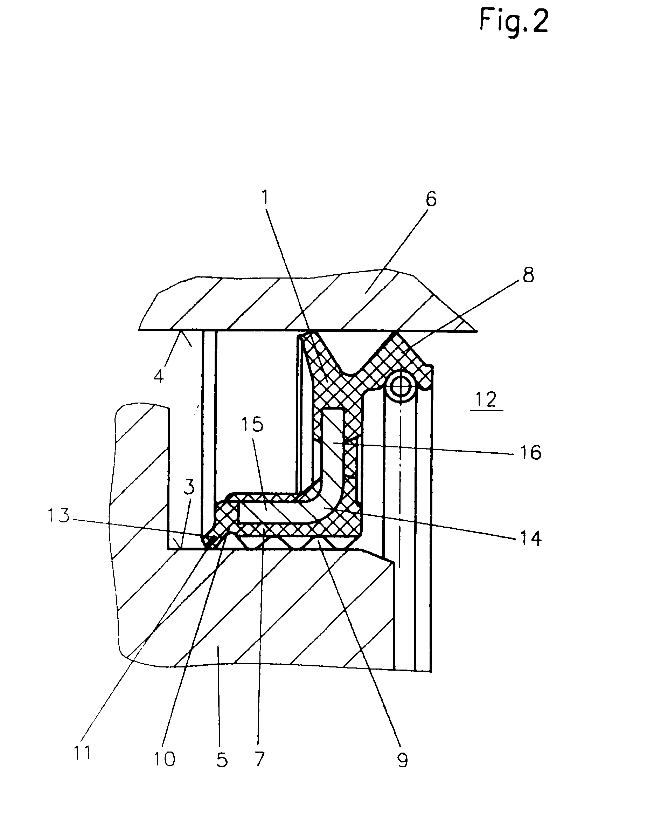

In Fig. 2 ist ein zweites Ausführungsbeispiel gezeigt, das ebenfalls geeignet ist, den abzudichtenden Raum 12 bedarfsweise zu entlüften. Abweichend von dem in Fig. 1 beschriebenen Ausführungsbeispiel ist das erste Maschinenteil 5 als Achse ausgebildet, wobei sich das als Gehäuse ausgebildete zweite Maschinenteil 6 um das erste Maschinenteil 5 bewegt. Die erste Dichtung 7 stützt sich auf der ersten Zylinderfläche 3 der Achse ab, während die zweite, dynamisch beanspruchte Dichtung 8 die zweite Zylinderfläche 4 des zweiten Maschinenteils 6 dynamisch abdichtend berührt. Die Entlüftung des abzudichtenden Raums erfolgt, wie im Ausführungsbeispiel Fig. 1 beschrieben.

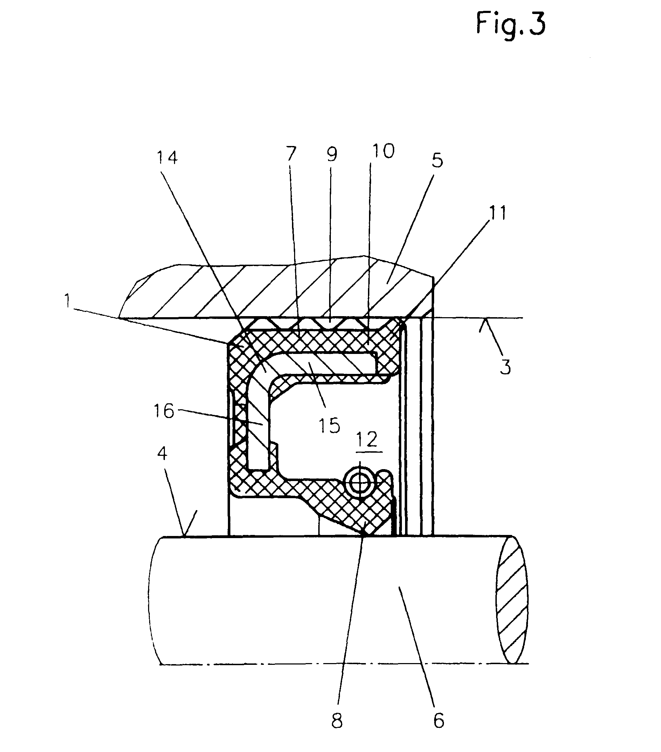

In Fig. 3 ist ein drittes Ausführungsbeispiel des erfindungsgemäßen Dichtrings gezeigt, wobei die Dichtungsanordnung derart ausgebildet ist, daß der abzudichtende Raum 12 bedarfsweise belüftet werden kann. Zur Belüftung des abzudichtenden Raums 12 ist auf der dem abzudichtenden Raum 12 zugewandten Seite die Lippendichtung 11 angeordnet, die sich unter radialer Vorspannung an der ersten Zylinderfläche 3 des ersten Maschinenteils 5 abstützt und in axialer Richtung einerseits den als Entlastungsnut 9 ausgebildeten Kanal verschließt.

Entsteht innerhalb des abzudichtenden Raums 12 ein relativer Unterdruck zur Umgebung, der größer ist als eine als Schwellwert festgelegte Druckdifferenz, wird die Lippendichtung 11 differenzdruckbedingt in radialer Richtung nach innen elastisch verformt und ein Druckausgleich findet statt. Liegt die Druckdifferenz anschließend unterhalb des Schwellwerts, legt sich die Lippendichtung 11 selbsttätig wieder an die erste Zylinderfläche 3 des ersten Maschinenteils 5 an.

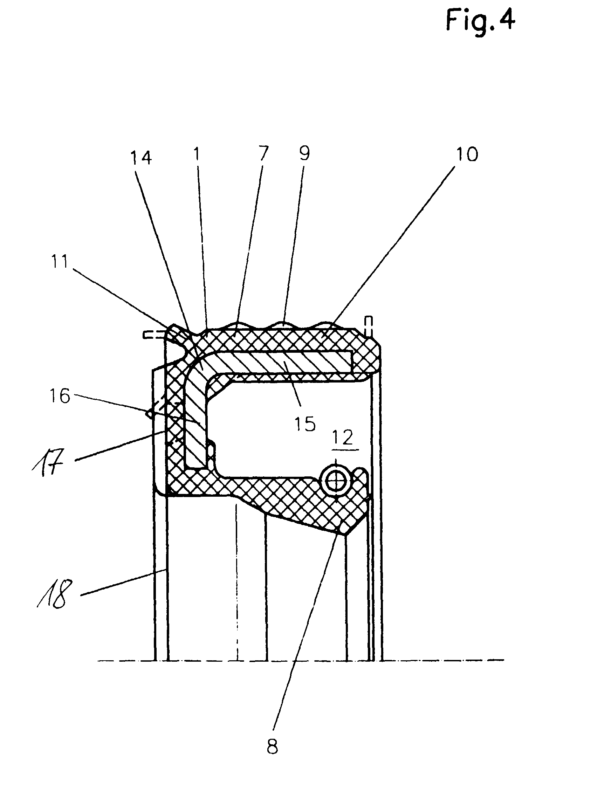

In Fig. 4 ist ein viertes Ausführungsbeispiel des erfindungsgemäßen Dichtrings gezeigt, wobei der Dichtring im wesentlichen dem Dichtring aus Fig. 1 entspricht. Abweichend davon ist die axialen Begrenzung 17, die die Stirnseite des Dichtrings bildet, mit der Lippendichtung 11 in einer Radialebene 18 angeordnet.

Die Verwendung der in den Fig. 1 bis 14 gezeigten Dichtungsanordnungen erfolgt zur Be- oder Entlüftung von abzudichtenden Räumen. Insbesondere beim Zusammenbau von Getrieben und Achsen kommt es wegen nicht entlüfteter Aggregate häufig zu einem Druckaufbau innerhalb des abzudichtenden Raums. Durch die Verwendung der erfindungsgemäßen Dichtungsanordnung wird die Druckdifferenz auf einen Wert unterhalb eines Schwellwerts reduziert, so daß auch bei längerer Liegezeit der Aggregate ein differenzdruckbedingtes Ausölen von Fett oder Leckagen ausgeschlossen sind.

## Patentansprüche

1. Dichtring zum Einfügen in den radialen Zwischenraum zwischen zwei einander koaxial umschließende, relativ bewegliche Zylinderflächen eines ersten und eines zweiten Maschinenteils (3, 6), umfassend erste Mittel zur statisch ruhenden Festlegung und Abdichtung des ersten Maschinenteils (3) sowie zweite Mittel (8) zur beweglichen Abdichtung des zweiten Maschinenteils (6), wobei die ersten Mittel durch einen mit dem erste Maschinenteil (3) in Eingriff stehenden, von zumindest einer Entlastungsnut (9) durchbrochenen Haltering (10) aus elastomerem Werkstoff gebildet sind sowie durch eine der Entlastungsnut (9) vorgelagerte, ringförmig gestaltete Lippendichtung (11), die durch den Druck des abzudichtenden Mediums beaufschlagt ist und sich oberhalb eines vorgegebenen Mindestdrucks elastisch verformt und in bezug auf das erste Maschinentel (3) außer Eingriff gelangt, wobei die Lippendichtung (11) die erste Zylinderfläche (3) während der bestimmungsgemäßen Verwendung des Dichtrings (1) unter einer radialen Vorspannung anliegend berührt und sich nur bei Überschreitung des Mindestdruckes in radialer Richtung elastisch verformt, dadurch gekennzeichnet, daß die Entlastungsnuten (9) einen im wesentlichen wannenförmigen Querschnitt aufweisen und eine radiale Tiefe, die 0,02 bis 1,0 mm beträgt und daß das Verhältnis aus der axialer Länge der Entlastungsnuten (9) und deren radialer Tiefe 50 bis 500 beträgt.

2. Dichtring nach Anspruch 1, dadurch gekennzeichnet, daß die Lippendichtung (11) einstückig ineinander übergehend mit dem Haltering (10) ausgebildet ist.

3. Dichtring nach einem der Ansprüche 1 bis 2, dadurch gekennzeichnet, daß das erste und das zweite Mittel (7, 8) und die Lippendichtung (11) materialeinheitlich und einstückig ineinander übergehend ausgebildet sind.

4. Dichtring nach einem der Ansprüche 1 bis 3, dadurch gekennzeichnet, daß der Haltering (10) radial außenseitig eine sich in axialer Richtung erstreckende, wellenförmige Oberflächenprofilierung aufweist.

5. Dichtring nach einem der Ansprüche 1 bis 4, dadurch gekennzeichnet, daß drei gleichmäßig in Umfangsrichtung verteilte, kanalförmige Entlastungsnuten (9) vorgesehen sind.

6. Dichtring nach einem der Ansprüche 1 bis 5, dadurch gekennzeichnet, daß die Lippendichtung (11) eine Armierung (13) aufweist, die von polymerem Werkstoff vollständig umschlossen ist.

7. Dichtring nach einem der Ansprüche 1 bis 6, dadurch gekennzeichnet, daß die Lippendichtung (11) und eine der axialen Begrenzungen (17) des Dichtrings in einer Radialebene (15) angeordnet sind.

## Claims

1. A sealing ring for insertion into the radial interspace between two relatively moveable cylindrical surfaces, one coaxially surrounding the other, of a first and of a second machine part (3, 6), the said sealing ring comprising first means for fixing and sealing off the first machine part (3) in a statically stationary manner and second means (8) for sealing off the second machine part (6) moveably, the first means being formed by a holding ring (10) made of elastomeric material, which is in engagement with the first machine part (3) and is pierced by at least one relief groove (9) and by an annularly designed lip seal (11) which precedes the relief groove (9) and which is subjected to the pressure of the medium to be sealed off and is deformed elastically above a predetermined minimum pressure and comes out of engagement with respect to the first machine part (3), during the intended use of the sealing ring (1) the lip seal (11) being in bearing contact under radial prestress with the first cylindrical surface (3) and being deformed elastically in the radial direction only when the minimum pressure is exceeded, characterized in that the relief grooves (9) have a substantially trough-shaped cross section and a radial depth which is 0.02 to 1.0 mm, and in that the ratio of the axial length of the relief grooves (9) to their radial depth is 50 to 500.

2. A sealing ring according to claim 1, characterized in that the lip seal (11) is designed to merge in one piece into the holding ring (10).

3. A sealing ring according to one of claims 1 to 2, characterized in that the first and the second means (7, 8) and the lip seal (11) are designed to merge one into the other materially integrally and in one piece.

4. A sealing ring according to one of claims 1 to 3, characterized in that the holding ring (10) has, radially on the outside, a wavy surface profiling extending in the axial direction.

5. A sealing ring according to one of claims 1 to 4, characterized in that three channel-shaped relief grooves (9) distributed uniformly in the circumferential direction are provided.

6. A sealing ring according to one of claims 1 to 5, characterized in that the lip seal (11) has a reinforcement (13) which is completely enclosed by polymeric material.

7. A sealing ring according to one of claims 1 to 6, characterized in that the lip seal (11) and one of the axial delimitations (17) of the sealing ring are arranged in one radial plane (15).

## Revendications

1. Anneau d'étanchéité destiné à être inséré dans l'espace intermédiaire radial entre deux surfaces cylindriques relativement mobiles s'entourant réciproquement de manière coaxiale d'une première et d'une seconde pièces de machine (3, 6), comprenant des premiers moyens pour la fixation et l'étanchéification statiques de la première pièce de machine (3) ainsi que des seconds moyens (8) pour l'étanchéification mobile de la seconde pièce de machine (6), les premiers moyens étant formés par une bague de support (10) en matière élastomère percée d'au moins une gorge de décharge (9) et en prise avec la première pièce de machine (3), ainsi que par un joint à lèvre (11) de forme annulaire situé avant la gorge de décharge (9), qui est soumis à la pression du milieu à étanchéifier et se déforme de manière élastique au-dessus d'une pression minimum prédéfinie et n'est plus en prise avec la première pièce de machine (3), le joint à lèvre (11) étant en contact étroit avec la première surface cylindrique (3), sous l'effet d'une précontrainte radiale, pendant l'utilisation conforme aux prescriptions de l'anneau d'étanchéité (1) et ne se déformant de manière élastique dans la direction radiale que lors d'un dépassement de la pression minimum, caractérisé en ce que les gorges de décharge (9) sont pourvues d'une section transversale ayant essentiellement la forme d'une cuvette et ont une profondeur radiale mesurant de 0,02 à 1,0 mm et en ce que le rapport entre la longueur axiale des gorges de décharge (9) et leur profondeur radiale va de 50 à 500.

2. Anneau d'étanchéité selon la revendication 1, caractérisé en ce que le joint à lèvre (11) est exécuté de manière à se confondre avec la bague de support (10).

3. Anneau d'étanchéité selon l'une des revendications 1 à 2, caractérisé en ce que les premiers et seconds moyens (7, 8) et le joint à lèvre (11) sont formés du même matériau et exécutés de manière à se confondre.

4. Anneau d'étanchéité selon l'une des revendications 1 à 3, caractérisé en ce que la bague de support (10) est pourvue, sur le côté extérieur dans le sens radial, d'un profilage superficiel ondulé s'étendant dans la direction axiale.

5. Anneau d'étanchéité selon l'une des revendications 1 à 4, caractérisé en ce que l'on prévoit trois gorges de décharge (9) en forme de canaux réparties de manière uniforme dans la direction circonférentielle.

6. Anneau d'étanchéité selon l'une des revendications 1 à 5, caractérisé en ce que le joint à lèvre (11) est pourvu d'une armature (13) qui est totalement entourée de matière polymère.

7. Anneau d'étanchéité selon l'une des revendications 1 à 6, caractérisé en ce que le joint à lèvre (11) et une des limitations axiales (17) de l'anneau d'étanchéité sont situés dans un plan radial (15).
